# EUROPEAN PATENT SPECIFICATION

(11) **EP 0 836 260 B1**
(45) Date of publication and mention of the grant of the patent: **04.07.2001**
(21) Application number: 97500167.8
(22) Date of filing: 08.10.1997
(51) Int. Cl.: H02G 9/04, H02G 9/10

(54) **Airport beaconing cable ducting and guiding system**
Kabelkanal- und Führungssystem für Flughafenbaken
Système de canalisation et de guidage de câbles pour balises d'aéroport

(30) Priority: 08.10.1996 ES 9602124
(43) Date of publication of application: 15.04.1998
(73) Proprietor: Ulma Hormigon Polimero, S. Coop., 20560 Onati (Guipuzcoa) (ES)
(72) Inventor: Tamayo Aranguren, Ester, 20560 Onati (Guipuzcoa) (ES)
(74) Representative: Carpintero Lopez, Francisco

(56) References cited:
- US-A- 4 343 033

## Description

### SPECIFICATION

### OBJECT OF THE INVENTION

The invention relates to a modular transformable airport runway beaconing cable ducting and guiding system.

The system is based upon the traditional spaced arrangement of a number of boxes within which appropriate transformers and requisite electrical gear are arranged, which boxes lie coincidentally with the location of the beaconing points. These boxes are linked by means of modular polymerised concrete and/or similar furrowed plates, the plates being structured to be axially joined to each other and for guiding along their furrows the cables feeding the electrical gear housed within each box, the system being complemented with a number of rack-like and similarly prefabricated parts that contribute to ducting the cables from the appropriate plates to the receiving boxes.

### BACKGROUND OF THE INVENTION

Airport runway beaconing elements are fed from suitably located and appropriately spaced boxes, these boxes housing transformers and requisite electrical gear within them, the cables that are to feed to the actual beaconing elements being distributed from said transformers.

Document US-4 343 033 is known relating to a marker light especially designed to be installed in airports, which has a metallic body on which inside a current transformer unit is installed and a second cylindrical body that has a luminous element which is fed by means of the transformer, this second body being completely sealed with respect to the first body without the possibility of water or humidity entrance through the same.

The boxes are usually made of concrete and the ducts joining such boxes for ducting the cables with which they are to be fed are likewise made of concrete, based upon fixed structures obtained "in situ" on the very spot, using traditional shuttering techniques.

Whenever the installation ducting the cables feeding these boxes or the arrangement of said boxes needs to be changed on the very spot because the beaconing system has been modified or extended, the said concrete structures previously made using the shuttering technique "in situ" will have to be modified; this modification is expensive in terms of both time and materials because of the complexity that undertaking any modification whatsoever of the concrete structure entails.

### DESCRIPTION OF THE INVENTION

The system disclosed herein has been devised to fully resolve the above drawbacks, and therefore based upon the use of conventional or other boxes housing the appropriate transformers within them, its essential characteristics are focused on the cable ducting and guiding system between the relevant boxes.

More specifically, the cable ducting and guiding system of the invention relies upon the use of furrowed plates that may be axially and laterally coupled to cover the stretch between boxes. These plates are arranged upon a concrete bed that receives and holds them, whereas the cables arranged in the furrows of said plates are covered by a layer of harsh mortar, sand or the like, in order to provide the requisite external insulation, although this layer may be easily removed if the electric wiring should be howsoever modified.

The furrowed plates have initially blind albeit frangible holes at their base through which the cables feeding the electrical gear in each box may be pulled out. These holes are arranged stepwise axially on the plate for the cables to be easier to select and pull out, and to avoid their being piled.

The furrowed plate facing the box is assisted by a cable rack that lies beneath the relevant plate and is designed to protect the cables as they run between the plate and the box.

The cable rack has a groove facing the box hole, which box hole is initially blind albeit also easily frangible. The cable rack also has a drainage hole at its base, that may have the appropriate drainage line connected thereto.

For its part, the furrowed plate guiding the feeder cables has holes close to its corners through which concrete from the bed on and to which the very plate is mounted and fixed overflows, thereby for a firmer anchoring of the plate to be achieved.

Furthermore, the said furrowed plate is provided on its shorter end faces with intercoupling means, such as complementary ledges and rebates, in order for the plates to be properly coupled to each other axially.

The furrowed plate is also provided with a layer of gravel stuck to its underside in order to provide it with a better hold to the receiving concrete.

Moreover, each furrowed plate is also provided, at areas close to the longer side edges, with extensions from its bases to an extent approximately equal to one-half the width of a furrow, in order that the concrete layer on which the anchored plate is mounted, yet to solidify, may overflow its edges to ensure a firmer hold to said layer.

Similarly, the end edges or borders of the furrowed plates are provided with a slight upward convergence to define, on being axially coupled to one another, a sort of V-shaped furrow which, upon being filled with concrete, contributes to the axial fixing between plates.

For their part, the boxes, which may be conventional boxes, i.e. an installation may be ducted and guided using existing boxes, may be assembled vertically with other like boxes, to which end the lower base of one box has been provided, as a novel feature, to have rebates complementing ledges purposely provided at the mouth of the box lying immediately below, the boxes at all events having a recessed portion at their bottom which, on being torn, allows the cables through when such boxes are mounted duly coupled to one another in a vertical arrangement, the top box being closed with a conventional cast-iron cover.

The above-mentioned components or parts will preferably be made of polymerised concrete.

### DESCRIPTION OF THE DRAWINGS

In order to provide a fuller description and contribute to the complete understanding of the characteristics of this invention, a set of drawings is attached to the specification as an integral part thereof which, while purely illustrative and not fully comprehensive, shows the following:

Figure 1 is a sectional view, along a vertical plane, of a furrowed plate lying coincidentally with a box housing a transformer, which plate guides the feeder cables, wherein, for instance, one of the cables reaches the transformer after crossing the cable rack arranged beneath the plate and likewise facing the box.

Figure 2 is a top plan view of the furrowed plate made in accordance with the object of the invention.

Figure 3 is a side elevation view of the furrowed plate shown in the preceding figure.

Figure 4 is a sectional view along line A-B of one of the recessed portions with which the furrowed plate is purposely provided , the tearing of which recessed portion yields a hole or pathway for the appropriate feeder cable.

Figure 5 is a sectional view along line C-D, that is similarly shown in figure 2, revealing both the rebate and the ledge for axially intercoupling the furrowed plates.

Figure 6 is a sectional view along line E-F, similarly of figure 2, revealing the configuration of the holes provided close to each corner of the furrowed plate, in order to successfully secure or fix the same to the appropriate concrete layer on which it is to be arranged.

Figure 7 is another sectional close-view of the joint between two furrowed plates, showing the V-shaped furrow that contributes to fixing both plates together.

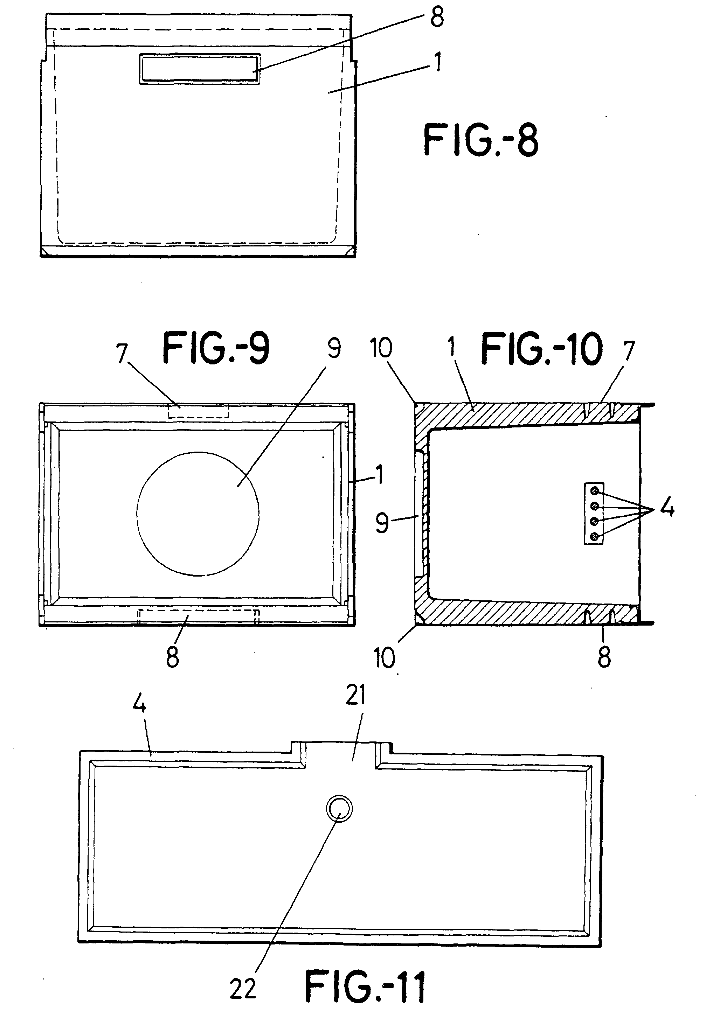

Figure 8 is a side elevation view of the box made in accordance with the object of the invention, revealing a recessed portion close to its top edge, the tearing of which will define a hole for the appropriate cables to pass.

Figure 9 is a plan view of the same box show in the preceding figure.

Figure 10 is a sectional view of the box shown in the preceding two figures.

Figure 11 is a plan view of the cable rack over which the furrowed plate shown in figure 2 is arranged.

Figure 12 is a view similar to that of figure 1, albeit with two boxes vertically coupled together, wherein the top box is provided with the hole obtained by tearing the recessed portion at its bottom.

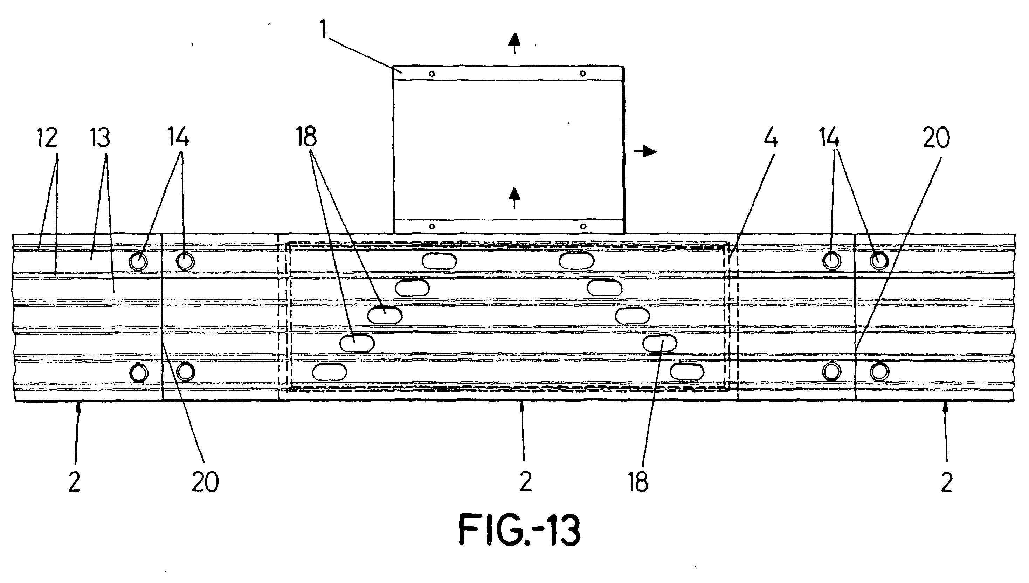

Figure 13 is a plan view of the axial coupling between furrowed plates, and the arrangement over the appropriate cable rack and the arrangement of the respective box.

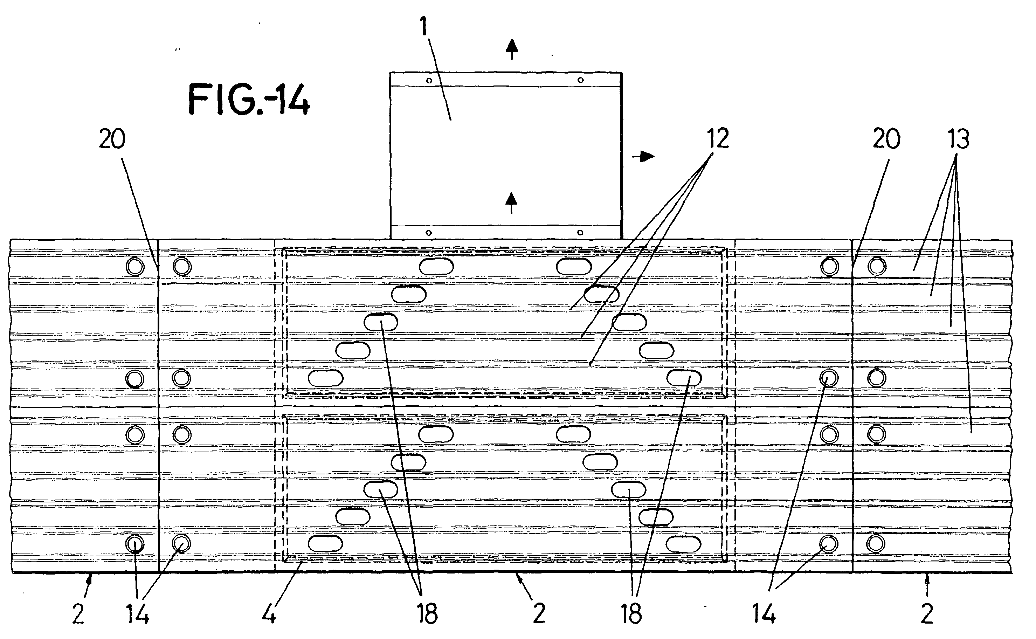

Figure 14 is, finally, a collateral composition or coupling of furrowed plates such as the one shown in figure 3, yielding a greater number of furrows for guiding cables.

### PREFERRED EMBODIMENT OF THE INVENTION

With reference to the aforesaid figures, the airport beaconing cable guiding and ducting system disclosed herein relies on the use of modular furrowed plates (2), suitably assembled axially and laid over a concrete bed, useful for channelling and guiding cables (3) that feed the beaconing means after crossing transformers (5) arranged within boxes (1), which boxes are appropriately spaced from one another and lie coincidentally with the beaconing means. Cable racks (4) are arranged on one of the sides of the boxes (1) provided with transformers (5), that will also be useful for laying the furrowed plates (2) that are arranged next to such boxes (1) and above the cable rack (4).

The furrowed plates (2) provided for guiding and ducting the cables (3) have a number of parallel, longitudinal ledges (12) defining appropriate furrows (13) between them for the actual cables (3) to pass, the plates (2) being altogether modular and capable of being axially assembled to each other to cover the distance required for guiding the beaconing cabling, bearing in mind that several furrowed plate (2) assemblies may be arranged in parallel when the cables as a whole to be carried thus so require.

Fixing of the furrowed plates to the receiving concrete layer is aided by inverted frustum-shaped holes (14) located close to the plate ends, through which concrete overflows before setting, in order for the furrowed plates (2) to be properly anchored.

Furthermore, the underside of the said furrowed plate (2) has a layer of gravel stuck to it, which expedites and improves its hold to the concrete layer receiving it.

With a view to laterally coupling the plates, the end walls defining the furrows are drawn in to an extent approximately equal to one-half the width of a furrow. The free edges thus obtained also in any contribute to fixing or anchoring the plates, being as it is that they provide portions acted on by the concrete receiving the same.

One of the shorter side faces is provided with a rebate (16) and the opposite one is provided with a ledge (17), said rebate and ledge being complementary and defining a tonguing and grooving in the side coupling between plates (2).

Furthermore, each furrow (13) is provided with a depression (18) that defines a recessed portion (19) at the bottom of the respective furrow (13), thereby for the tearing of this recessed portion (19) defined by the depression (18) to provide a hole that allows a cable (3) through in order to feed the beacon. These holes resulting from the configuration of the relevant depression (18), as the case may be, are preferably slotted and arranged in stepwise fashion in order for the possible cables to be fed to each beacon to run parallel and suitably separated along the cable racks (4).

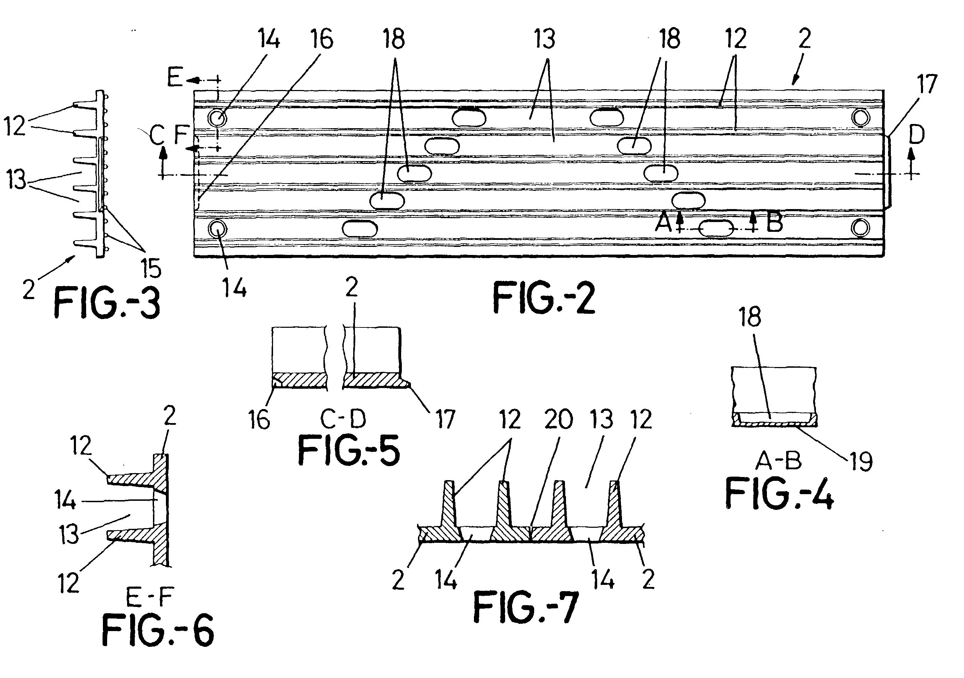

The relevant edges of the end sides where the rebate (16) and the complementary ledge (17) are provided for axial coupling of plates (2) by tonguing and grooving, is upwardly bevelled or convergent in order for the axial coupling of two plates (2), as shown in figure 7, to define a small angular furrow (20) or V-shaped space, which shall be filled with overflowing concrete, thereby to contribute to fixing the relevant plates (2) to one another.

Similarly, the ends of the plates define side extensions in order for the concrete layer, yet to solidify, upon which the actual plate (2) is laid or arranged, to overflow such edges, similarly contributing to a better hold to the concrete when it sets.

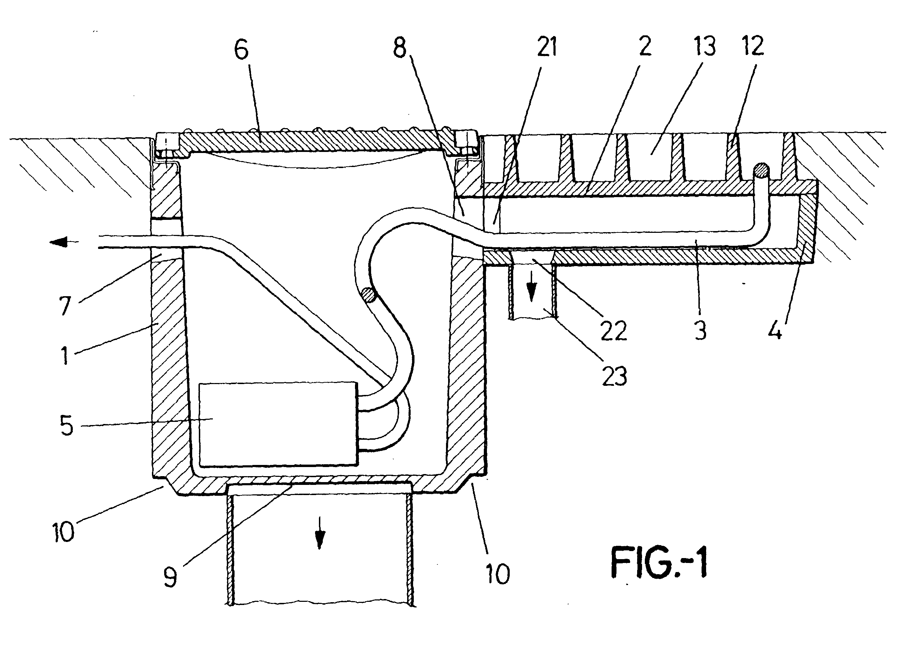

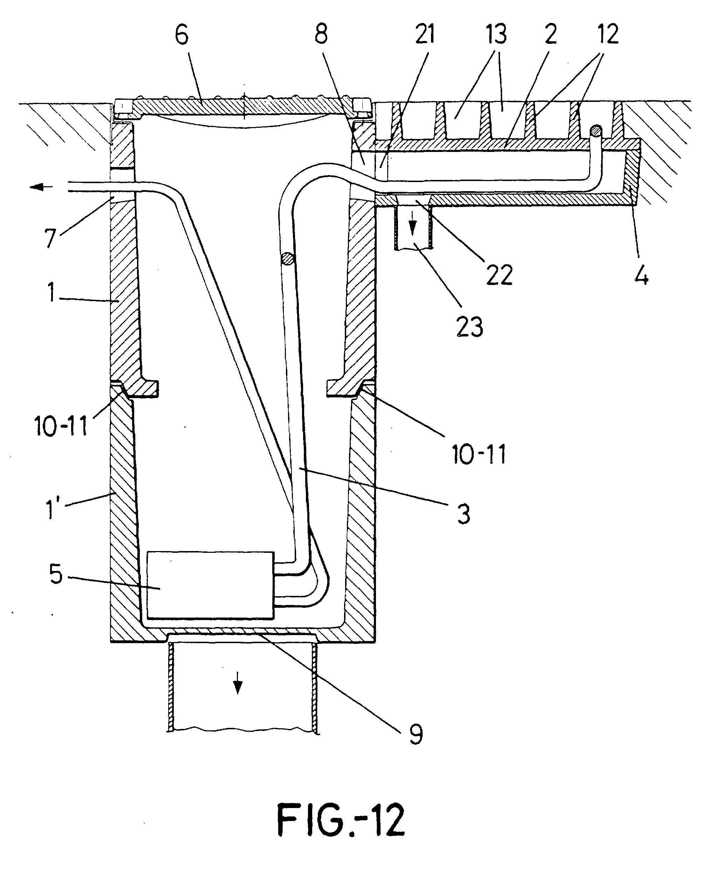

For its part, the cable rack (4) will have a side opening (21) that is to face the recessed portion (8) of the relevant box (1), in order that the tearing of said recessed portion (8) may allow the cable (3) through, as is clearly shown in figures 1 and 12, a hole (22) being further provided at its bottom for an appropriate delivery or drainage neck (23) to be coupled.

The boxes (1) are provided to house the respective transformers (5) or electrical gear, and their top is provided with a cast-iron cover (6) fixable by any conventional system.

These boxes (1) are provided with a through hole (7) on one of their side faces for the cables that feed the beacons with the current supplied by the transformers (5), whereas another hole (8) is provided on the opposite face for the passage of the cables (3) that feed the transformers, the bottom of the boxes being provided with a recessed portion (9) the tearing of which will yield a hole or pathway for the cables (3) in the event that the box (1) is vertically coupled onto the top of a second box (1'), as shown in figure 12, the top box (1) being therefore provided on the perimeter of its base with a rebate or incut (10) complementing a ledge (11) provided at the mouth of the lower box (1') as shown in said figure 12.

Naturally, when the box (1) is used without being coupled to a box (1') there is no need for the recessed portion to be torn, for the latter will stand as the actual bottom of the box (1), whereas when it is to be coupled to the box (1'), the recessed portion (9) will be torn from its bottom in order to communicate both boxes (1) and (1'), as shown in figure 12, and allow the cables (3) through.

In accordance with the above-described structural features, the system as such is installed as follows:

If an arrangement of cables and boxes (1) already exists, the arrangement of cables and fixed concrete structures must be removed, albeit leaving the existing boxes (1), although the latter may be modified in order to be able to mount the second box (1') where necessary, in accordance with the above-described features.

If the entire installation or system is new, the boxes (1) and/or (1') are first arranged at pre-set distances in accordance with the placement and arrangement of the beaconing means, and next to those having transformers (5), on a plane below ground level, the cable racks (4) are arranged with their side openings (21) lying coincidentally with the side holes (8) of the boxes (1) or (1') for the cable to pass into the boxes as such.

A furrowed plate (2) is arranged over each tray (4), resting thereon, and the plates attached to the boxes are then joined to each other, making up a continuous alignment of such plates (2), the main feeder cables running along the furrows (13) of such plates and being suitably branched upon arriving at each box, to feed the transformers lying therein, which will ultimately serve to feed the beaconing devices.

Before the concrete layer previously laid on the ground sets or solidifies, the furrowed plates (2) that are to guide the beaconing cabling or cables (3) are assembled and arranged in order for said furrowed plates (2) to be fixed to the ground when the concrete sets.

Afterwards, and as described hereinbefore, the system is supplied with suitable electrical gear, tearing such recessed portions (19) at the rebates (18) as may be required for the cables to pass from the furrowed plates (2) to the transformers (5) lying within the boxes (1).

Finally, and after fitting the system with the electrical parts, a layer of sand or harsh mortar is laid between the furrows (13) of the plates (2) to cover the respective cabling. This layer may be effortlessly removed from the prefabricated and electrical elements already fitted if it should be necessary to work on the electrical gear arranged within the system and to extend or modify the installation.

## Claims

1. An airport beaconing cable ducting and guiding system, comprising a number of concrete boxes (1), spaced from each other, to house transformers (5) that feed beacons, the top of which boxes is provided with a closing cover (6), which boxes (1) have holes (7) and (8) for the inlet and outlet of beaconing feeder cables, characterised in that a furrowed plate (2) is arranged on one of the side faces of the associated box (1), which may be axially coupled in modular fashion to other like plates, forming a continuous line linking said boxes, in order to guide cables (3) feeding electrical energy electricity to said transformers (5) and from the latter to the beacon, the plate (2) being provided to have a number of ledges (12) defining the same number of longitudinal furrows (13) adapted to duct and guide respective cables (3), holes adapted to be crossed by the cables being provided at the bottom of the plate (2) after tearing recessed portions (19) originating from the same number of slotted rebates (18) arranged stepwise on said furrowed plate (2), said plate (2) being placed over cable racks (4) adapted to expedite the passage of the conducting cables from the furrows (13) of the plates (2) toward the transformers (5).

2. A cable ducting and guiding system, as in claim 1, characterised in that the furrowed plates (2) are arranged over a concrete layer to which they are fixed, a concrete mass that passes through conical holes (14) provided close to the respective comers of the appropriate plate (2) contributing to such fixing.

3. A cable ducting and guiding system, as in the preceding claims, characterised in that each plate (2) has intercoupling means at its ends or shorter sides, which comprise a rebate (16) and a complementary ledge (17) that define tonguing and grooving means for the plates (2) to be axially coupled, said end edges being provided with a bevel defining an upward convergence to provide a sort of V-shaped furrow (20) that is also reached by the concrete from the layer upon which the very plate (2) is mounted.

4. A cable ducting and guiding system, as in the preceding claims, characterised in that the end walls of the furrowed plates (2) are drawn in with respect to its edges, to an extent approximately equal to one-half the width of the furrow, free edges being formed that expedite the hold of the plates (2) to the receiving concrete and otherwise side coupling to other plates (2).

5. A cable ducting and guiding system, as in the preceding claims, characterised in that a layer of gravel (15) is stuck to the underside or bottom surface of the plate (2) that defines a means for such bottom surface to hold to the actual concrete layer on which the actual furrowed plate (2) is seated and arranged.

6. A cable ducting and guiding system, as in the preceding claims, characterised in that the cable rack (4) has a furrow (21) defining a pathway opposite the hole (8) of the box (1) for cables (3) reaching from the rack (4) and originating in the furrows (13) of the plate (2), the recessed portion (8) of the box (1) and tray (4) lying opposite each other when the tray is mounted, the tray also having a hole (22) on its bottom to which a neck (23) may be coupled as a drainage or delivery means.

7. A cable ducting and guiding system, as in the preceding claims, characterised in that the box (1) may be provided at its bottom with a perimetric stepping or rebate (10) complementing a ledge (11) that is purposely provided on the top or mouth of a box (1') that may be arranged thereunder, thereby for communication to be established therebetween, both forming a single deeper body, a communication being established between the same by tearing a recessed portion (9) lying at the very bottom of the box (1) and (1').

## Patentansprüche

1. Kabelkanal- und Führungssystem für Flughafenbaken mit einer Reihe von in Abstand voneinander angeordneten Betonkammern (1) zur Aufnahme von Transformatoren (5) für die Versorgung der Baken, welche oben einen Deckel (6) zum Verschliessen oder Abdecken aufweisen, wobei die Kammern (1) Öffnungen (7) und (8) für den Ein- und Ausgang der Bakenversorgungskabel besitzen, dadurch gekennzeichnet, dass an einer der Seitenwände der verbundenen Kammer (1) eine gerillte Platte (2) angebracht wird, die modular und axial mit anderen gleicher Art verbunden werden kann und eine durchgehende Verbindung zu den Kammern darstellt, in der die Kabel (3) für die Stromversorgung der Transformatoren (5) und, ausgehend von diesen, der Baken verlegt werden, woneben vorgesehen ist, dass die Platte (2) eine Reihe von Vorsprüngen (12) besitzt, die weitere längliche Rillen (13) für die Führung der Kabel (3) bilden, welche durch Öffnungen gelegt werden, die infolge des Druchbruchs abgeschwächter Bereiche (19) im Boden der Platte (2) entstehen, die durch längliche, abgestuft angeordnete Ausnehmungen (18) dieser gerillten Platte (2) gebildet werden, während die Platte (2) auf Kabelablagen (4) angeordnet wird, welche den Durchgang der Kabel von den Kanälen (13) der Platte (2) zu den Transformatoren (5) erleichtern.

2. Kabelkanal- und Führungssystem, nach Anspruch 1 dadurch gekennzeiechnet, dass die gerillten Platten (2) auf einer Betonschicht angeordnet und an derselben befestigt werden, wobei zur Befestigung eine Betonmasse beiträgt, welche durch die in der Nähe der heweiligen Ecken der entsprechenden Platte (2) vorgesehenen kegelförmigen Öffnungen (14) dringt.

3. Kabelkanal- und Führungssystem, nach den vorangehenden Ansprüchen dadurch gekennzeichnet, dass jede Platte an den Enden oder schmaleren seiten über Verbindungsmittel verfügt, die aus einer Ausnehmung (16) und einem Vorsprung (17) bestehen und Spundteile für die axiale Verbindung der Platten (2) untereinander bilden, woneben vorgesehen ist, dass diese äusseren Ränder abgeschrägt werden und nach oben hin eine Verengung darstellen, durch welche eine Art V-förmige Kehle (20) entsteht, in welche der Beton der Schicht für die Montage der Platte (2) ebenfalls eindringt.

4. Kabelkanal- und Führungssystem, nach den vorangehenden Ansprüchen dadurch gekennzeichnet, dass die äusseren Wände der gerillten Platten (2) den Rändern gegenüber nach hinten in einem Mass versetzt werden, das etwa der Hälfte der Kanalbreite entspricht, wodurch freie Ränder entstehen, welche das Anhaften der Platte (2) am aufnehmenden Beton und andernfalls die seitliche Verbindung mit anderen Platten (2) erleichtert.

5. Kabelkanal- und Führungssystem, nach den vorangehenden Ansprüchen dadurch gekennzeichnet, dass die untere Fläche bzw. der Boden der Platte (2) eine Kiesschicht (15) aufweist, die als Mittel zur Befestigung des Bodens auf der Betonschicht, auf welcher die gerillte Platte (2) angeordnet wird, dient.

6. Kabelkanal- und Führungssystem, nach den vorangehenden Ansprüchen dadurch gekennzeichnet, dass die Kabelaufnahme (4) eine Rille (21) aufweist, die einen Durchbruch bildet, der der Öffnung (8) der Kammer (1) gegenüberliegt und für die Kabel vorgesehen ist, die ausgehend von den Rillen (13) der Platte (2) über die Kabelaufnahme (4) zu dieser Öffnung gelangen, während sich der abgeschwächte Bereich (8) der KAmmer (1) und die Kabelaufnahme (4) bei der Montage derselben gegenüberliegen und letztere im Boden eine Öffnung (22) besitzt, an der eine Leitung (23) als Abfluss oder Auslauf angeschlossen wird.

7. Kabelkanal- und Führungssystem, nach den vorangehenden Ansprüchen dadurch gekennzeichnet, dass die Kammer (1) in ihrem unteren Bereich eine am Umfang angeordnete Abstufung oder Ausnehmung (20) aufweist, welche durch einen zu diesem Zweck im oberen Bereich einer darunter anzuordnenden Kammer (1') vorgesehenen Vorsprung ergänzt wird, wodurch zwischen ddenselben eine Verbindung entsteht und beide, infolge des Durchbruchs des abgeschwächten Bereichs (9) im Boden der Kammer (1) und (1'), einen einzigen, tieferen Körper bilden.

## Revendications

1. Système de canalisation et de guidage de câbles, pour les balises des aéroports, comprenant une série de coffrets en béton (1), espacés entre eux pour loger les transformateurs (5) d'alimentation des balises, et dotés sur leur partie supérieure d'une trappe de fermeture et couverture (6) ; les coffrets (1) ont des orifices (7) et (8) d'entrée et de sortie des câbles d'alimentation pour le balisage ; caractérisé en ce que sur l'une des parties latérales du coffret associé (1), est disposée une plaque cannelée (2) susceptible d'être raccordée modulairement et axialement à d'autres analogues, pour former une canalisation continue de raccordement avec les coffrets, pour le guidage des câbles (3) d'alimentation électrique à ces transformateurs (5) et de ces derniers à la balise, étant prévu que la plaque (2) soit dotée d'une série d'épaulements (12) formant autant de cannelures longitudinales (13) adaptées pour conduire et guider les câbles (3), trous adaptés pour être croisés par les câbles prévus au fond de la plaque (2) après fracture des parties affaiblies (19) causées par autant d'abaissements allongés (18) espacés sur cette plaque cannelée (2), cette plaque (2) étant située sur des plateaux porte-câbles (4) adaptés pour faciliter le passage des câbles de canalisation des conduits (13) des plaques (2) aux transformateurs (5).

2. Système de canalisation et de guidage de câbles, selon la 1^{ère} revendication, caractérisé en ce que les plaques cannelées (2) sont disposées sur une couche de béton à laquelle elles sont fixées, du béton passant à travers des orifices coniques (14) prévus à proximité des coins respectifs de la plaque (2) correspondante en aidant ainsi à la fixation.

3. Système de canalisation et de guidage de câbles, selon les revendications précédentes, caractérisé en ce que chaque plaque (2) dispose à ses extrémités ou petits côtés de moyens d'accouplement constitués par un abaissement (16) et un épaulement complémentaire (17) formant des moyens de raccordement mâle-femelle dans l'accouplement axial des plaques (2), étant prévu que ces bords extrêmes soient biseautés de sorte à converger vers le haut pour former une espèce de cannelure en «V» (20) à laquelle le béton de la couche de montage de la plaque (2) accédera aussi.

4. Système de canalisation et de guidage de câbles, selon les revendications précédentes, caractérisé en ce que les parois extrêmes des plaques cannelées (2) sont rentrées par rapport à leurs bords sur une mesure équivalant environ à la moitié de la largeur du conduit, pour former des bords libres qui faciliteront la prise des plaques (2) au béton récepteur ainsi que l'accouplement latéral avec d'autres plaques.

5. Système de canalisation et de guidage de câbles, selon les revendications précédentes, caractérisé en ce que la superficie inférieure ou fond de la plaque (2) dispose d'une couche de gravier (15) adhérée constituant un moyen de fixation de cette superficie du fond à la couche de béton sur laquelle la plaque cannelée (2) est assise et disposée.

6. Système de canalisation et de guidage de câbles, selon les revendications précédentes, caractérisé en ce que le plateau porte-câbles (4) dispose d'une cannelure(21) donnant forme à un passage en face de l'orifice (8) du coffret (1) pour les câbles
(3) qui accèdent depuis le plateau (4) en provenance des cannelures (13) de la plaque (2), les parties affaiblies (8) du coffret (1) et du plateau (4) étant situées face à face dans le montage de ce dernier, lequel dispose aussi en son fond d'un orifice (22) où l'on peut accoupler un goulot (23) d'écoulement ou de drainage.

7. Système de canalisation et de guidage de câbles, selon les revendications précédentes, caractérisé en ce que le coffret (1) est susceptible d'être doté, sur sa partie inférieure, d'un espacement ou abaissement périmétrique (19) en complément d'un épaulement (11) prévu à cet effet sur la partie supérieure ou embouchure d'un coffret (1') susceptible d'être posé sous le premier, pour les faire communiquer, tous deux formant un seul corps plus profond, leur communication étant établie par la fracture d'une partie affaiblie (9) correspondant au fond du coffret (1) et (1').
